# EUROPEAN PATENT SPECIFICATION

(11) **EP 3 139 680 B1**
(45) Date of publication and mention of the grant of the patent: **24.07.2019**
(21) Application number: 14891052.4
(22) Date of filing: 25.09.2014
(51) Int. Cl.: H04W 74/08

(54) **CHANNEL ACCESS METHOD, SYSTEM AND COMPUTER READABLE STORAGE MEDIUM**
KANALZUGRIFFSVERFAHREN, SYSTEM UND COMPUTERLESBARES SPEICHERMEDIUM
PROCÉDÉ ET SYSTÈME D'ACCÈS À UN CANAL ET SUPPORT DE STOCKAGE LISIBLE PAR ORDINATEUR

(30) Priority: 30.04.2014 CN 201410182795
(43) Date of publication of application: 08.03.2017
(73) Proprietor: ZTE Corporation, Shenzhen, Guangdong 518057 (CN)
(72) Inventor: YANG, Dan, Shenzhen Guangdong 518057 (CN); LV, Kaiying, Shenzhen Guangdong 518057 (CN); LI, Nan, Shenzhen Guangdong 518057 (CN); SUN, Bo, Shenzhen Guangdong 518057 (CN); HAN, Zhiqiang, Shenzhen Guangdong 518057 (CN)
(74) Representative: Brevalex
(86) International application number: PCT/CN2014/087468
(87) International publication number: WO 2015/165205

(56) References cited:
- EP-A1- 2 645 801
- CN-A- 101 401 334
- CN-A- 103 002 544
- CN-A- 103 427 932
- CN-A- 104 053 243
- US-A1- 2009 252 110
- US-A1- 2010 061 342
- US-A1- 2011 044 298

## Description

### TECHNICAL FIELD

The disclosure relates to the field of radio communications, and in particular to a method, a system, stations and a computer readable storage medium for accessing to a channel.

### BACKGROUND

At present, in the field of wireless networks, Wireless Local Area Networks (WLAN) develop rapidly, and there is increased demand in coverage of the WLAN globally. A working group of an industrial specification Institute of Electrical and Electronic Engineers (IEEE) 802.11 defines a series of WLAN technical standards including 802.11a, 802.11b, 802.11g, 802.11n and the like in sequence, and mainly makes specifications of a Physical Layer (PHY) and a Media Access Control (MAC) layer. Thereafter, other task groups appear gradually, which are devoted to develop specifications relating to improvements of the conventional 802.11 techniques. For example, a task group for High Efficiency WLAN (HEW) mainly researches how to transmit data via a WLAN more efficiently under a scenario of a densely distributed network.

A basic framework of the WLAN refers to a Basic Service Set (BSS) consisting of Stations (STA), the BSS containing an Access Point (AP) STA and a plurality of non-AP STAs associated with the AP STA. 802.11 defines two basic modes for accessing to a wireless channel, a contention-based access mode, i.e., Distributed Coordination Function (DCF), and a scheduling-based access mode, i.e., Point Coordination Function (PCF). On the basis of the two basic access modes, by taking demand on a Quality of Service (QoS) of a service flow into account, also provided are two modes for accessing to a channel, an Enhanced Distributed Channel Access (EDCA) function and a Hybrid Coordination function Controlled channel Access (HCCA) function.

The DCF is the most elementary mode for accessing to a channel. A Carrier Sense Multiple Access mechanism with Collision Avoidance (CSMA/CA) enables a plurality of STAs to share a wireless channel. The EDCA is an enhanced mode for accessing to a channel. Based on the CSMA/CA mechanism, the EDCA defines four Access Categories (AC), i.e., an AC Background (AC_BK), an AC Best Effort (AC_BE), an AC Video (AC_VI) and an AC Voice (AC_VO). Each AC defines a set of specific parameters for specifying statistically a priority level of each AC when accessing to a channel. In process of accessing to a channel based on contention in the EDCA is: when a channel is turned to an idle state, waiting for a fixed duration called as an Arbitration Inter-Frame Space (AIFS), waiting for a time period for random backoff, and then obtaining a Transmission Opportunity (TXOP).

Under the EDCA and HCCA modes, an STA obtains a TXOP, which is bounded period where the STA may transmit a specific type of communication, by means of the process of accessing to a channel. Once the TXOP is obtained, the STA may continuously transmit a data frame, a control frame, a management frame or receive a response frame according to an AC. A precondition is that durations of these frame sequences do not exceed the upper limit of the TXOP set for the AC. At the starting time of the TXOP, Network Allocation Vectors (NAV) of other auditor STAs will be set, and within this time, the auditor STAs will not send data. In addition, in the conventional art, the STA is allowed to cut the TXOP off using a Contention Free End (CF-End) frame, such that the TXOP is terminated early. When the previous TXOP is terminated, the channel will be re-opened to allow access contention of all STAs.

In a typical scenario of an HEW, STAs are very densely distributed, such that contention on a channel is severe. Accordingly, TXOPs which can be obtained by each STA will be reduced, which causes that there may be more buffer data to be sent by the STAs. For example, a typical application of the service of the HEW is a video service, in which downlink data is more than uplink data usually. The priority in which an AP accesses to a channel may be improved by configuring channel access parameters with high priorities for APs in the conventional art, such that the possibility of obtaining TXOPs by the APs can be increased theoretically. However, the APs still need to contend for a channel, so the contention cost cannot be reduced US 2010/0061342 A1 provides an example of a STA handing off a remainder of a TXOP to another STA.

### SUMMARY

In order to solve the existing technical problems, the embodiments of the disclosure provide a method, system, STAs and a computer readable storage medium for accessing to a channel.

An embodiment of the disclosure provides a method for accessing to a channel, which may include:
a first STA obtains a first time period for transmission and sends indication information to a second STA within the first time period for transmission, the indication information being configured to inform the second STA of obtaining a second time period for transmission;
the second receives the indication information; and
the second STA obtains the second time period for transmission, in response to receiving the indication information and based on the indication information, ,and transmits a radio frame within the second time period for transmission;
wherein an upper time limit value of the second time period for transmission is determined by the second STA by setting an upper time limit value of a Transmission Opportunity, TXOP, corresponding to an Access Category, AC, of data to be sent by the second STA as the upper time limit value of the second time period for transmission; and
the second time period for transmission is started before the first time period for transmission has elapsed.

In the solution, the first time period for transmission may be a TXOP acquired by the first STA accessing to a channel based on contention, or the first time period for transmission may be a time period for transmission pre-allocated to the first STA.

In the solution, the indication information may be a specific radio frame which is sent to the second STA from the first STA, or may be a specific field carried by a radio frame which is sent to the second STA from the first STA.

The solution may further include:
when a response frame is necessary for the specific radio frame or the radio frame carrying the specific field, obtaining, by the second STA, the second time period for transmission refers to obtaining the second time period for transmission after the second STA sends the response frame; and
when a response frame is unnecessary for the specific radio frame or the radio frame carrying the specific field, obtaining, by the second STA, the second time period for transmission refers to obtaining the second time period for transmission after the second STA receives the radio frame.

The solution may further include:
when the indication information is received, the second STA pauses a backoff process which is being executed, and transmits a data frame; and
after the second time period for transmission has elapsed, the second STA resumes the paused backoff process.

In the solution, before the first STA sends the indication information to the second STA, the method may further include:
the first STA and the second STA perform negotiation on capability or indication of capability.

In the solution, the indication information may be further configured to set an NAV; and when the indication information is received by another STA recently updated by the first STA, said another STA may set the NAV after a specific time.

The solution may further include that: when the indication information is received, if the second STA decides to abandon obtaining the second time period for transmission, the second STA sends a radio frame, indicating ending of the second time period for transmission, to the first STA, the radio frame being a response frame, an acknowledgment frame or a management frame carrying information on the abandoning.

An embodiment of the disclosure provides a system for accessing to a channel, which may include:
a first STA configured to obtain a first time period for transmission and send indication information to a second STA within the first time period for transmission, the indication information being configured to inform the second STA of obtaining a second time period for transmission; and
the second STA configured to receive the indication information, obtain the second time period for transmission, in response to receiving the indication information and based on the indication information, and transmit a radio frame within the second time period for transmission;
wherein the second STA is further configured to determine an upper time limit value of the second time period for transmission by setting an upper time limit value of a Transmission Opportunity, TXOP, corresponding to an Access Category, AC, of data to be sent by the second STA as the upper time limit value of the second time period for transmission, and determine that the second time period for transmission is started before the time period for transmission has elapsed.

An embodiment of the disclosure also provides a computer readable storage medium. The storage medium may include a set of computer executable instructions for executing the method for accessing to a channel according to any one of the above embodiments of the disclosure.

The embodiments of the disclosure provide a method, system, STAs and a computer readable storage medium for accessing to a channel. A first STA obtains a first time period for transmission and informs a second STA of obtaining a second time period for transmission; and the second STA transmits data within the second time period for transmission. Thus, when any one first STA obtains the first time period for transmission, the second STA can be informed of obtaining the second time period for transmission, such that capability of the second STA on a channel contention will be greatly improved, thereby improving the channel access rate of the second STA.

### BRIEF DESCRIPTION OF THE DRAWINGS

Fig. 1 is a flowchart 1 of a method for accessing to a channel according to an embodiment of the disclosure;
Fig. 2 is a flowchart 2 of a method for accessing to a channel according to an embodiment of the disclosure;
Fig. 3 is a flowchart 3 of a method for accessing to a channel according to an embodiment of the disclosure;
Fig. 4 is a diagram of a basis topology of a BSS according to an embodiment of the disclosure;
Fig. 5 is an exemplary flowchart 1 of a method for accessing to a channel according to an embodiment of the disclosure;
Fig. 6 is an exemplary flowchart 2 of a method for accessing to a channel according to an embodiment of the disclosure;
Fig. 7 is an exemplary flowchart 3 of a method for accessing to a channel according to an embodiment of the disclosure;
Fig. 8 is an exemplary flowchart 4 of a method for accessing to a channel according to an embodiment of the disclosure;
Fig. 9 is an exemplary flowchart 5 of a method for accessing to a channel according to an embodiment of the disclosure;
Fig. 10 is an exemplary flowchart 6 of a method for accessing to a channel according to an embodiment of the disclosure;
Fig. 11 is an exemplary flowchart 7 of a method for accessing to a channel according to an embodiment of the disclosure;
Fig. 12 is an exemplary flowchart 8 of a method for accessing to a channel according to an embodiment of the disclosure;
Fig. 13 is an exemplary flowchart 9 of a method for accessing to a channel according to an embodiment of the disclosure;
Fig. 14 is an exemplary flowchart 10 of a method for accessing to a channel according to an embodiment of the disclosure;
Fig. 15 is a diagram of a basis structure of a system for accessing to a channel according to an embodiment of the disclosure;
Fig. 16 is a diagram of a basis structure of an STA according to an embodiment of the disclosure; and
Fig. 17 is a diagram of a basis structure of another STA according to an embodiment of the disclosure.

### DETAILED DESCRIPTION

In the embodiments of the disclosure, a first STA obtains a first time period for transmission and sends indication information to a second STA within the first time period for transmission. The indication information is configured to inform the second STA of obtaining a second time period for transmission. In addition, the second STA obtains the second time period for transmission and transmits a radio frame within the second time period for transmission.

The disclosure is further described in detail below by means of the drawings and specific embodiments.

### Embodiment 1

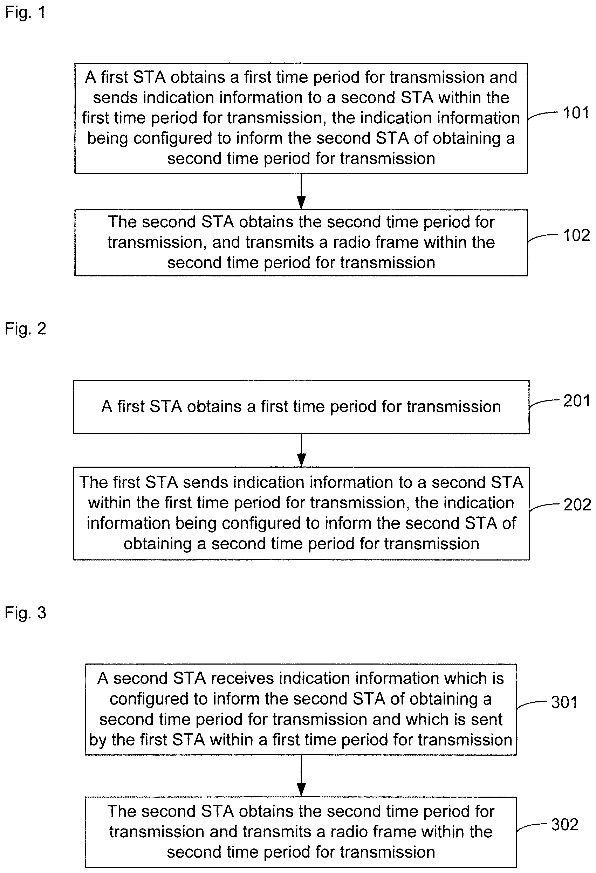

The embodiment 1 of the disclosure provides a method for accessing to a channel. As shown in Fig. 1, the method includes the steps as follows.

In Step 101, A first STA obtains a first time period for transmission and sends indication information to a second STA within the first time period for transmission. The indication information is configured to inform the second STA of obtaining a second time period for transmission.

Here, the first time period for transmission obtained by the first STA may be a TXOP obtained by the first STA accessing to a channel based on contention in an EDCA mechanism. Alternatively, the first time period for transmission may be a time period for transmission obtained by the first STA in a non-contention mode. For example, when the first STA is a non-AP STA, a time period for transmission may be pre-allocated for the non-AP STA by an AP STA.

The ending time of the second time period for transmission obtained by the second STA may be later than that of the first time period for transmission. An upper time limit value of the second time period for transmission is set by the second STA according to an upper time limit value of a TXOP corresponding to an AC of data to be sent.

When the first time period for transmission obtained by the first STA is the TXOP obtained by the first STA accessing to channel based on contention in the EDCA mechanism, the step that the first STA obtains the first time period for transmission includes: after detecting idleness of media, the first STA delays for an AIFS, then delays for a time period for random backoff, and successfully performs frame exchange once so as to obtain the first time period for transmission.

After successfully obtaining the first time period for transmission, the first STA sends the indication information to the second STA and informs the second STA of obtaining the second time period for transmission. The indication information may be a specific radio frame which is sent to the second STA from the first STA, or a specific field carried by a radio frame which is sent to the second STA from the first STA.

Informing, by the first STA, the second STA of obtaining the second time period for transmission by means of the specific radio frame refers to informing, by the first STA, the second STA of obtaining the second time period for transmission by means of a radio frame in a specific frame format. That is, when the second STA receives the radio frame in the specific frame format, the second time period for transmission may be obtained. The radio frame in the specific frame format may include: a trigger frame, a CF-End frame, a data frame or the like.

Informing, by the first STA, the second STA of obtaining the second time period for transmission by means of the specific field carried by the radio frame refers to informing, by the first STA, the second STA of obtaining the second time period for transmission by means of one or more bits carried by the radio frame.

When a response frame is necessary for the specific radio frame or the radio frame carrying the specific field, obtaining, by the second STA, the second time period for transmission refers to obtaining the second time period for transmission after the second STA sends the response frame; and
when a response frame is unnecessary for the specific radio frame or the radio frame carrying the specific field, obtaining, by the second STA, the second time period for transmission refers to obtaining the second time period for transmission after the second STA receives the specific radio frame or the radio frame containing the specific field.

Before the first STA sends the indication information to the second STA, the first STA and the second STA will perform negotiation on capability. The negotiation on capability refers to interaction between the first STA and the second STA so as to determine whether the first STA supports sending of the indication information and whether the second STA supports receiving of the indication information. Alternatively, before the first STA sends the indication information to the second STA, the first STA and the second STA perform indication of capability, so as to determine whether the first STA supports a capability of indicating to the second STA and whether the second STA accepts the indication capability of the first STA.

The indication information about obtaining of the second time period for transmission is further configured to set an NAV. When the indication information is received by another STA recently updated by the first STA, said another STA sets an NAV after a specific time.

In addition, when the indication information about obtaining of the second time period for transmission is received, if the second STA decides to abandon obtaining the second time period for transmission, the second STA may send a radio frame, indicating ending of the second time period for transmission, to the first STA, wherein the radio frame may be a response frame or an acknowledgment frame, or may be a management frame which is actively sent by the second STA and carries information on the abandoning.

In Step 102, the second STA obtains the second time period for transmission, and transmits a radio frame within the second time period for transmission.

When the indication information is received, the second STA pauses a backoff process which is being executed, and transmits a data frame.

After the second time period for transmission has elapsed, the second STA resumes the paused backoff process.

An upper time limit value of the second time period for transmission is set by the second STA as required. The second STA sets an upper time limit value of a TXOP corresponding to an AC of data to be sent by the second STA as the upper time limit value of the second time period for transmission.

Here, the second time period for transmission obtained by the second STA is started before the first time period for transmission has elapsed. The second time period for transmission may be started from the time when data transmission is performed by the first STA within the first time period for transmission. The second STA sends buffer data to a corresponding STA before the set upper time limit value of the second time period for transmission is reached. That is, the second STA may send own buffer data to any one or more of other STAs within a set time range of the second time period for transmission, and one or more STAs here may include or may not include the first STA.

It can be seen that the overhead of the channel contention of the second STA can be greatly reduced in such way. This is because any one of the first STAs may inform, after obtaining a first TXOP, a second STA of obtaining a second TXOP, so the rate of the channel access of the second STA can be greatly improved. After obtaining a first time period for transmission, the first STA directly informs the second STA of obtaining a second time period for transmission. After obtaining the second time period for transmission, the second STA occupies a channel within the second time period for transmission to perform data communication following the time when the data transmission is finished by the first STA within the first time period for transmission. The time length of the second time period for transmission is decided by the second STA according to an upper limit of transmission time corresponding to a certain AC, such that there are no any limits to the ending time of the second time period for transmission. The ending time of the second time period for transmission may be the same as that of the first time period for transmission, or may be later or earlier than the ending time of the first time period for transmission.

It is to be noted that the first STA may or may not transmit data within the first time period for transmission. In the case of where data non-transmission the first STA does not transmit data, the first STA contends for a transmission time period only for the second STA using self-capabilities in a process of accessing to a channel based on contention in EDCA, or the first STA directly forwards a transmission time period pre-allocated for itself to the second STA which needs to send data. In the case of data transmission, the first STA contends for a period of data transmission time for each of the first STA and other second STAs using self-capabilities simultaneously, or the first STA shares the self-obtained transmission time period with the second STA. Thus, a second TXOP obtained by the second STA may be regarded as an inheritance of the first time period for transmission obtained by the first STA, and after the inheritance, the time length of the second time period for transmission may be set as required.

### Embodiment 2

The embodiment 2 of the disclosure provides another method for accessing to a channel. As shown in Fig. 2, the method includes the steps as follows.

In Step 201, a first STA obtains a first time period for transmission.

In Step 202, the first STA sends indication information to a second STA within the first time period for transmission. The indication information is configured to inform the second STA of obtaining a second time period for transmission.

Here, the first time period for transmission obtained by the first STA may be a TXOP obtained by the first STA accessing to a channel based on contention in an EDCA mechanism. Alternatively, the first time period for transmission may be a time period for transmission obtained by the first STA in a non-contention mode, for example, a time period for transmission pre-allocated, when the first STA is a non-AP STA, for the non-AP STA by an AP STA.

When the first time period for transmission obtained by the first STA is the TXOP obtained by the first STA accessing to a channel based on contention in the EDCA mechanism. The step that the first STA obtains the first time period for transmission includes: after detecting idleness of media, the first STA delays for an AIFS, then delays for a time period for random backoff, and successfully performs frame exchange once so as to obtain the first time period for transmission.

After successfully obtaining the first time period for transmission, the first STA sends the indication information to the second STA and informs the second STA of obtaining the second time period for transmission. The indication information may be a specific radio frame which is sent to the second STA from the first STA, or a specific field carried by a radio frame which is sent to the second STA from the first STA.

Informing, by the first STA, the second STA of obtaining the second time period for transmission by means of the specific radio frame refers to informing, by the first STA, the second STA of obtaining the second time period for transmission by means of a radio frame in a specific frame format. That is, when the second STA receives the radio frame in the specific frame format, the second time period for transmission may be obtained. The radio frame in the specific frame format may include: a trigger frame, a CF-End frame, a data frame or the like.

Informing, by the first STA, the second STA of obtaining the second time period for transmission by means of the specific field carried by the radio frame refers to informing, by the first STA, the second STA of obtaining the second time period for transmission by means of one or more bits carried by the radio frame.

Before the first STA sends the indication information to the second STA, the first STA and the second STA will perform negotiation on capability. The negotiation on capability refers to interaction between the first STA and the second STA so as to determine whether the first STA supports sending of the indication information and whether the second STA supports receiving of the indication information. Alternatively, before the first STA sends the indication information to the second STA, the first STA and the second STA perform indication of capability, so as to determine whether the first STA supports a capability of indicating to the second STA and whether the second STA accepts the indication capability of the first STA.

After sending an informing message about obtaining of the second time period for transmission to the second STA, if a radio frame indicative of ending of the second time period for transmission is received, the first STA determines that the second STA abandons obtaining the second time period for transmission. The radio frame may be a response frame or an acknowledgment frame, or may be a management frame which is actively sent by the second STA and carries information on the abandoning.

### Embodiment 3

The embodiment 3 of the disclosure provides another method for accessing to a channel. As shown in Fig. 3, the method includes the steps as follows.

In Step 301, a second STA receives indication information which is configured to inform the second STA of obtaining a second time period for transmission and which is sent by the first STA within a first time period for transmission.

In Step 302, the second STA obtains the second time period for transmission and transmits a radio frame within the second time period for transmission.

The indication information, received by the second STA, about obtaining of the second time period for transmission may be a radio frame in a specific frame format, or may be a radio frame containing a specific field.

When the second STA receives a radio frame, sent by the first STA, in a specific frame format, or when the second receives a radio frame, sent by the first STA, containing a specific field, the second STA may obtain the second time period for transmission. The radio frame in the specific frame format may include a trigger frame, a CF-End frame, a data frame or the like.

After obtaining the second time period for transmission, the second STA sets an upper time limit value of the second time period for transmission as required. The second STA sets the upper time limit value of the second time period for transmission according to an upper time limit value of a TXOP corresponding to an AC of data to be sent. An upper time limit value of a corresponding AC such as an AC_BK, an AC_BE, an AC_VI or an AC_VO may be taken as the upper time limit value of the second time period for transmission.

When the indication information is received, if the second STA decides to abandon obtaining the second time period for transmission, the second STA may send a radio frame, indicating ending of the second time period for transmission, to the first STA. The radio frame may be a response frame or an acknowledgment frame, or may be a management frame which is actively sent by the second STA and carries information on the abandoning.

Thereafter, the second STA may send buffer data to other STAs as required before the set upper time limit value of the second time period for transmission is reached. That is, the second STA may send its buffer data to any one or more of other STAs within a time range of the second time period for transmission. Said one or more of the other STAs here may include or may not include the first STA. Here, the second time period for transmission obtained by the second STA is started before the first time period for transmission has elapsed. The second time period for transmission may be started from the time when data transmission is finished by the first STA within the first time period for transmission.

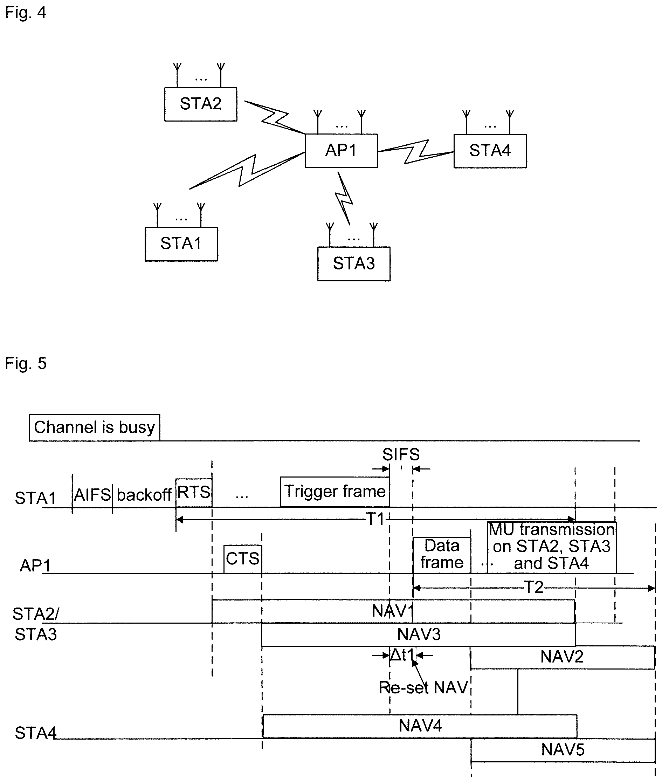

Fig. 4 is a diagram of an exemplary basis topology of a BSS. Fig. 4 shows a BSS in a wireless communication system under a dense scenario. The BSS includes an AP (i.e., AP1 shown in Fig. 4) and a plurality of non-AP STAs, STA1, STA2, STA3 and STA4. STA2 and STA3 are auditor STAs of STA1, that is, STA2 and STA3 may monitor data from STA1. STA4 is not an auditor STA of STA1, and therefore STA4 cannot monitor data from STA1. And STA1, STA2, STA3 and STA4 may receive data from AP1, respectively.

Based on the BSS in Fig. 4, a method for accessing to a channel provided by at least one embodiment of the disclosure will be introduced below in detail by means of specific examples as follows.

### Example 1

Fig. 5 is a schematic diagram of an operation timing of a method for accessing to a channel according to an example 1 of the disclosure. As shown in Fig. 5, STA1 accesses to a channel based on contention in an EDCA mechanism. After detecting idleness of media, STA1 delays for an AIFS, delays for a time period for random backoff, and then sends an RTS to AP1. When successfully acquiring a first time period for transmission T1 after successfully receiving a CTS returned by AP1, STA1 starts to send data. When monitoring the RTS, auditor STAs, STA2 and STA3, of STA1 set own NAVs as NAV1, and when monitoring a CTS sent by AP1, STA2 and STA3 set the own NAVs as NAV3. When monitoring the CTS sent to STA1 by AP1, STA4 sets an own NAV as NAV4.

STA1 sends a trigger frame to AP1. An ack policy field of the trigger frame is set as non-ack. When the trigger frame is received by AP1, a new second time period for transmission T2 is acquired, a TXOP limit of an AC_BK (which may be identical to or different from an AC in which is obtained by STA1) is taken as an upper time limit of a new transmission time period. After a Short Interframe Space (SIFS), AP1 starts the new second time period for transmission T2.

Besides, before sending the trigger frame to AP1, STA1 sets an indication about a capability of supporting sending of the trigger frame in a capability field of a radio frame. AP1 broadcasts an own capability of supporting and accepting trigger of an STA in a management frame (a beacon frame and/or an association frame).

STA1 sets a TXOP power save field in the trigger frame as 1 and indicates that STA1 will enter an energy saving mode. After receiving the trigger frame, AP1 will no longer send data to STA1.

STA2 and STA3 re-set own NAVs within time of Δt1=SIFS after receiving the trigger frame, and set the own NAVs as NAV2 when receiving a first frame within T2. When receiving the first frame within T2, STA4 sets an own NAV as NAV5.

AP1 performs downlink Multi-User (MU) transmission on STA2, STA3 and STA4 within a new transmission time period simultaneously, and data sent by AP1 within T2 may be data in any AC queue.

### Example 2

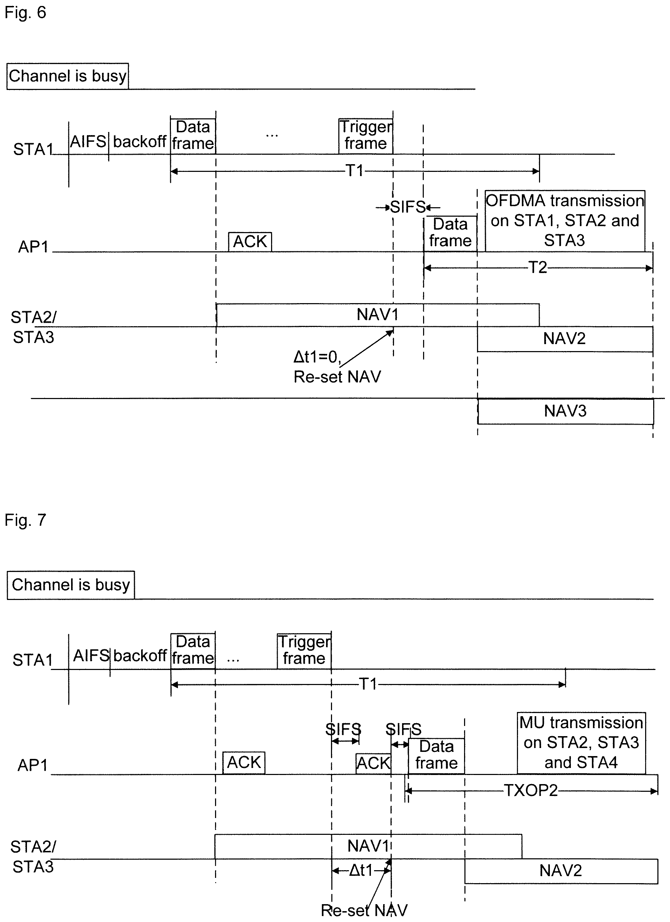

Fig. 6 is a schematic diagram of an operation timing of a method for accessing to a channel according to an example 2 of the disclosure. As shown in Fig. 6, STA1 accesses to a channel based on contention in an EDCA mechanism. After detecting idleness of media, STA1 delays for an AIFS, and then delays for a time period for random backoff; and STA1 successfully acquires a TXOP, a first time period for transmission T1, and starts to send data. When receiving a first frame within T1, auditor STAs, STA2 and STA3, set own NAVs as NAV1.

STA1 sends a trigger frame to AP1. An ack policy field of the trigger frame is set as non-ack. While AP1 receives the trigger frame, a new transmission time period, i.e., a second time period for transmission T2, is acquired, a TXOP limit of an AC_VO (which may be identical to or different from an AC in which T1 is obtained by STA1) is taken as an upper time limit of the new transmission time period, and after an SIFS, AP1 starts the new second time period for transmission T2.

Besides, before sending the trigger frame to AP1, STA1 sends a radio frame to AP1 so as to indicate a capability of supporting sending of the trigger frame. After receiving the radio frame, AP1 sends a radio frame as a response so as to indicate an own capability of supporting and accepting trigger of an STA. STA2 and STA3 re-set own NAVs within time of Δt1=0 after receiving the trigger frame, and set the own NAVs as NAV2 when receiving a first frame within T2. When receiving the first frame within T2, STA4 sets an own NAV as NAV3.

AP1 performs downlink Orthogonal Frequency Division Multiple Access (OFDMA) transmission on STA1, STA2 and STA3 within T2 simultaneously, and data transmitted by AP1 within T2 may be data in any AC queue.

### Example 3

Fig. 7 is a schematic diagram of an operation timing of a method for accessing to a channel according to an example 3 of the disclosure. As shown in Fig. 7, STA1 accesses to a channel based on contention in an EDCA mechanism. After detecting idleness of media, STA1 delays for an AIFS, and then delays for a time period for random return, and STA1 successfully acquires a first time period for transmission T1, and starts to send data. When receiving a first frame within T1, auditor STAs, STA2 and STA3, set own NAVs as NAV1.

After sending own data and acquiring a response frame ACK, STA1 sends a trigger frame to AP1. An ack policy field of the trigger frame is set as common response ACK. When receiving the trigger frame, AP1 returns an ACK. After AP1 returns the ACK, a second time period for transmission T2 is obtained, and a TXOP limit of an AC_BE is taken as an upper time limit of a new transmission time period. After an SIFS after returning the ACK, AP1 starts a transmission time period, i.e., the second time period for transmission T2.

STA2 and STA3 re-set own NAVs within a specific time of Δt1=SIFS+ACK after receiving the trigger frame, and set the own NAVs as NAV2 when receiving a first frame within T2.

AP1 performs MU transmission on STA2, STA3 and STA4 within T2 simultaneously, and data transmitted by AP1 within T2 may be data in any AC queue.

### Example 4

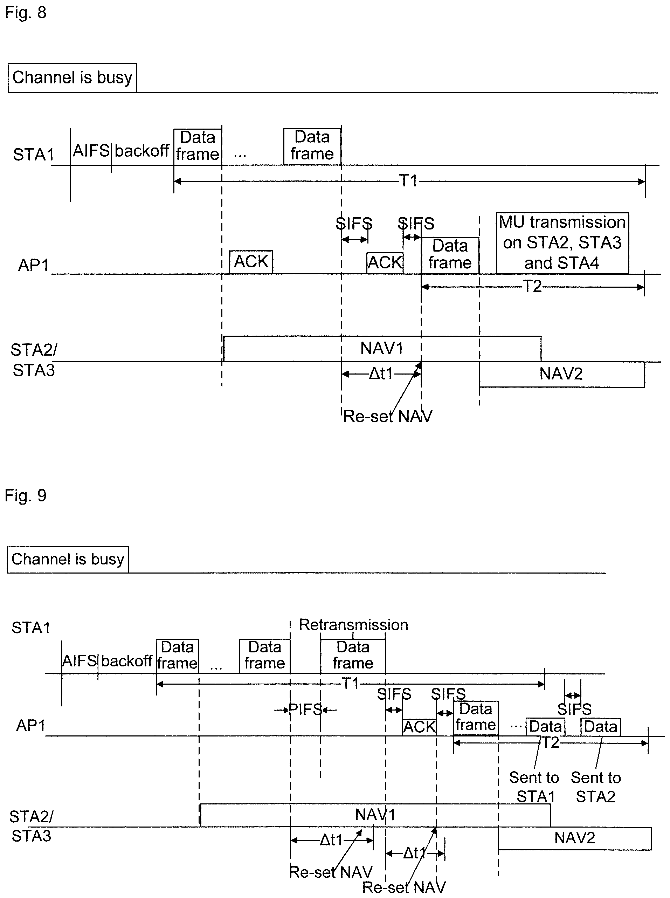

Fig. 8 is a schematic diagram of an operation timing of a method for accessing to a channel according to an example 4 of the disclosure. As shown in Fig. 8, STA1 accesses to a channel based on contention in an EDCA mechanism. After detecting idleness of media, STA1 delays for an AIFS, and then delays for a time period for random backoff, and STA1 successfully acquires a first time period for transmission T1, and starts to send a data frame. When receiving a first frame within T1, auditor STAs, STA2 and STA3, set own NAVs as NAV1.

A bit TriggerNewTxop of a data frame which is sent to AP1 from STA1 is set as 1, so as to indicate triggering of AP1 to acquire a new transmission time period. An ack policy field of the data frame is set as common ACK. When receiving the data frame, AP1 returns an ACK. After AP1 returns the ACK, a new transmission time period, i.e., a second time period for transmission T2, is obtained, and a TXOP limit of an AC_BE is taken as an upper time limit of the new transmission time period T2. After an SIFS after returning the ACK, AP1 starts the new transmission time period T2.

STA2 and STA3 re-set own NAVs within a specific time of Δt1=2×SIFS+ACK after receiving the trigger frame, and set the own NAVs as NAV2 when receiving a first frame within T2.

AP1 performs MU transmission on STA1, STA2 and STA3 within T2 simultaneously, and data transmitted by AP1 within T2 may be data in any AC queue.

### Example 5

Fig. 9 is a schematic diagram of an operation timing of a method for accessing to a channel according to an example 5 of the disclosure. As shown in Fig. 9, STA1 accesses to a channel based on contention in an EDCA mechanism. After detecting idleness of media, STA1 delays for an AIFS, and then delays for a time period for random backoff, and STA1 successfully acquires a first time period for transmission T1, and starts to send a data frame. When receiving a first frame within T1, auditor STAs, STA2 and STA3, set own NAVs as NAV1.

A bit TriggerNewTxop of a data frame which is sent to AP1 from STA1 is set as 1, so as to indicate triggering of AP1 to acquire a new transmission time period, i.e., a second time period for transmission T2. An ack policy field of the data frame is set as common response ACK. STA2 and STA3 successfully receive the data frame, and re-set own NAVs within a specific time of Δt1=SIFS+ACK after receiving the data frame.

If STA1 does not receive an acknowledgment frame ACK from AP1 within an interval of an SIFS after the data frame is sent, STA1 retransmits the data frame after a Point coordination function Interframe Space (PIFS). STA2 and STA3 successfully receive the retransmitted frame, and re-set the own NAVs within a specific time of Δt1=SIFS+ACK after receiving the retransmitted frame.

AP1 successfully receives the retransmitted frame and returns an ACK. After AP1 returns the ACK, a new transmission time period, i.e., a second time period for transmission T2, is obtained, and a TXOP limit of an AC_VI is taken as an upper time limit of the new transmission time period T2. After an interval of an SIFS after returning the ACK, AP1 starts the transmission time period T2.

STA2 and STA3 set the own NAVs as NAV2 when receiving a first frame within T2.

AP1 performs SIFS-based downlink data transmission on STA1, STA2 and STA3 within T2 simultaneously, wherein data 1 is data sent to STA1 and data 2 is data sent to STA2. Data sent by AP1 within T2 may be data in any AC queue.

### Example 6

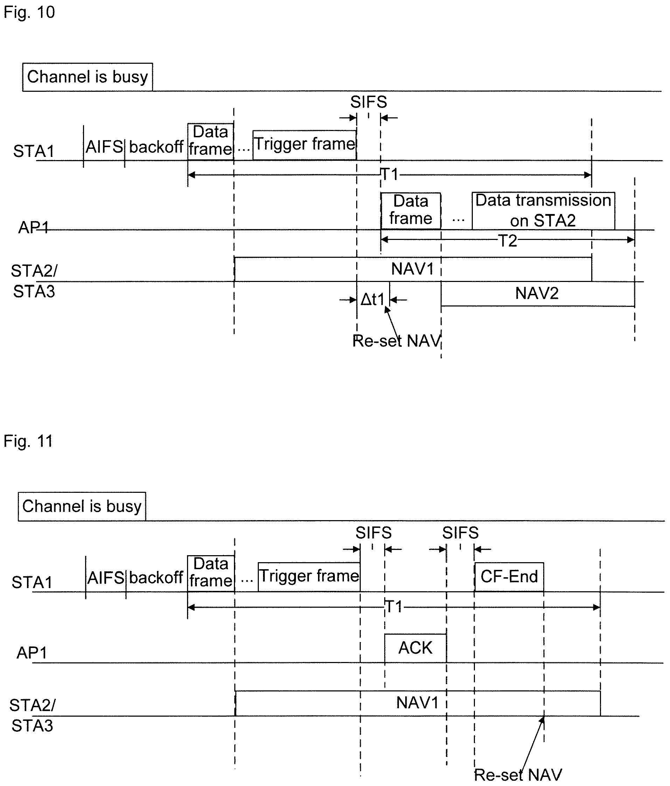

Fig. 10 is a schematic diagram of an operation timing of a method for accessing to a channel according to an example 6 of the disclosure. As shown in Fig. 10, STA1 accesses to a channel based on contention in an EDCA mechanism. After detecting idleness of media, STA1 delays for an AIFS, and then delays for a time period for random backoff, and STA1 successfully acquires a first time period for transmission T1, and starts to send data. When receiving a first frame within T1, auditor STAs, STA2 and STA3, set own NAVs as NAV1.

STA1 sends a trigger frame to AP1. An ack policy field of the trigger frame is set as non-ack. While AP1 receives the trigger frame, a new transmission time period, i.e., a second time period for transmission T2, is obtained, and a TXOP limit of an AC_BK is taken as an upper time limit of the new transmission time period T2. After an SIFS, AP1 starts the new transmission time period T2.

STA2 and STA3 re-set own NAVs within a specific time of Δt1=SIFS after receiving the trigger frame, and set the own NAVs as NAV2 when receiving a first frame within T2.

AP1 sends downlink data to STA2 within T2, and the data sent by AP1 within T2 may be data in any AC queue.

### Example 7

Fig. 11 is a schematic diagram of an operation timing of a method for accessing to a channel according to an example 7 of the disclosure. As shown in Fig. 11, STA1 accesses to a channel based on contention in an EDCA mechanism. After detecting idleness of media, STA1 delays for an AIFS, and then delays for a time period for random backoff, and STA1 successfully acquires a first time period for transmission T1, and starts to send data. When receiving a first frame within T1, an auditor STA, STA2, sets an own NAV as NAV1.

STA1 sends a trigger frame to AP1. An ack policy field of the trigger frame is set as common ack. After receiving the trigger frame, AP1 returns an ACK, and indicates, in the ACK, that AP1 abandons obtaining a new transmission time period. After receiving the ACK, STA1 sends a CF-END to re-set NAVs of auditor STAs, STA2 and STA3.

### Example 8

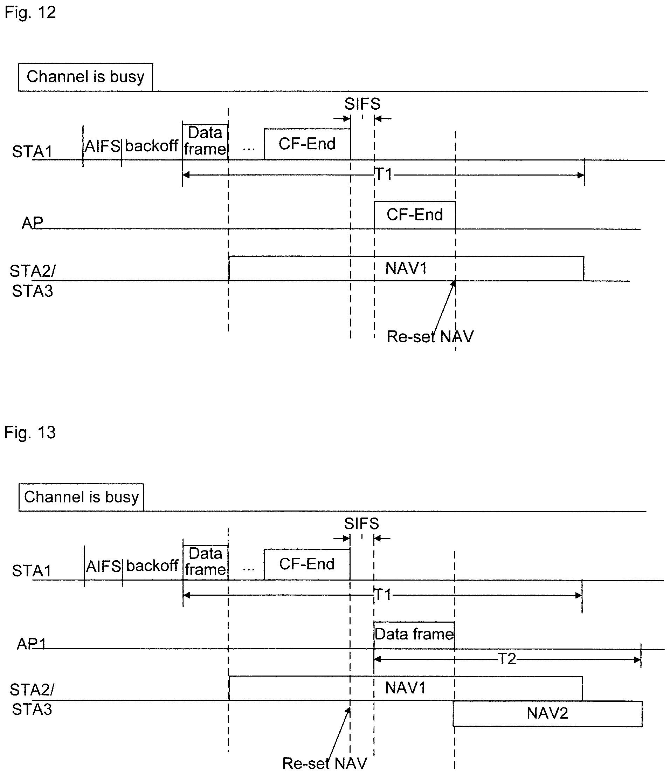

Fig. 12 is a schematic diagram of an operation timing of a method for accessing to a channel according to an example 8 of the disclosure. As shown in Fig. 12, STA1 accesses to a channel based on contention in an EDCA mechanism. After detecting idleness of media, STA1 delays for an AIFS, and then delays for a time period for random backoff, and STA1 successfully acquires a first time period for transmission T1, and starts to send data. When receiving a first frame within T1, an auditor STA, STA2, sets an own NAV as NAV1.

After sending own data and acquiring an acknowledgement frame ACK, STA1 sends a CF-End frame to AP1 as a trigger frame. The CF-End frame includes a field for indicating that AP1 may acquire a new transmission time period. STA2 and STA3 will re-set own NAVs after receiving the CF-End frame.

After receiving the CF-End frame from STA1, AP1 does not return or returns the same CF-End after an interval of an SIFS for indicating that AP1 abandons obtaining a new transmission time period, and re-sets NAVs of STAs around AP1.

### Example 9

Fig. 13 is a schematic diagram of an operation timing of a method for accessing to a channel according to an example 9 of the disclosure. As shown in Fig. 13, STA1 accesses to a channel based on contention in an EDCA mechanism. After detecting idleness of media, STA1 delays for an AIFS, and then delays for a time period for random backoff, and STA1 successfully acquires a first time period for transmission T1, and starts to send data. When receiving a first frame within T1, auditor STAs, STA2 and STA3, set own NAVs as NAV1.

After sending own data and acquiring an acknowledgement frame ACK, STA1 sends a CF-End frame to AP1 as a trigger frame. the CF-End frame carries a trigger indication for indicating that AP1 may acquire a new transmission time period. STA2 and STA3 will re-set the own NAVs after receiving the CF-End.

AP1 will send a piece of data to STA3 after an interval of an SIFS after receiving the CF-End from STA1, and obtains a new transmission time period, i.e., a second time period for transmission T2. A TXOP limit of an AC-VO is taken as an upper time limit of T2.

STA2, STA3 and STA4 set own NAVs as NAV2 when receiving a first frame within T2.

AP1 sends downlink data to STA4 within T2, and the data sent by AP1 within T2 may be data in any AC queue.

### Example 10

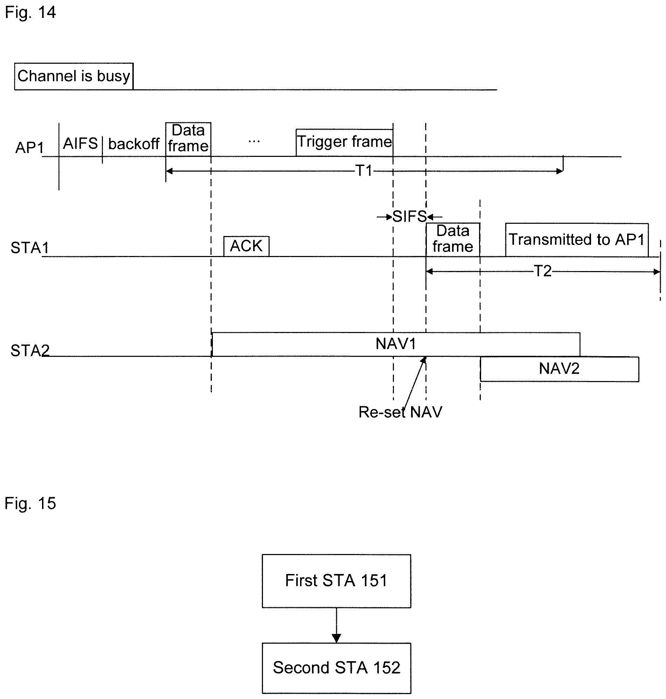

Fig. 14 is a schematic diagram of an operation timing of a method for accessing to a channel according to an example 10 of the disclosure. As shown in Fig. 14, AP1 accesses to a channel based on contention in an EDCA mechanism. After detecting idleness of media, AP1 delays for an AIFS, and then delays for a time period for random backoff, and AP1 successfully obtains a first time period for transmission T1, and starts to send data. When receiving a first frame within T1, an auditor STA, STA2, sets an own NAV as NAV1.

AP1 sends a trigger frame to STA1. An ack policy field of the trigger frame is set as non-ack. While STA1 receives the trigger frame, a new transmission time period, i.e., a second time period for transmission T2, is obtained, and a TXOP limit of an AC_BK is taken as an upper time limit of T2. After an interval of an SIFS, STA1 starts the new transmission time period T2.

STA2 re-sets an own NAV within a specific time of Δt1=SIFS after receiving the trigger frame, and sets the own NAV as NAV2 when receiving a first frame within T2.

STA1 performs uplink transmission on APs within T2 simultaneously, and data transmitted by STA1 within T2 may be data in any AC queue.

### Example 11

Fig. 5 is also a schematic diagram of an operation timing of a method for accessing to a channel according to an example 11 of the disclosure. As shown in Fig. 5, STA1 accesses to a channel based on contention in an EDCA mechanism. After detecting idleness of media, STA1 delays for an AIFS, delays for a time period for random backoff, and then sends an RTS to AP1. and successfully obtain a first time period for transmission T1 after successfully receiving a CTS returned by AP1, and STA1 starts to send data. When monitoring the RTS, auditor STAs, STA2 and STA3, of STA1 set own NAVs as NAV1, and when monitoring a CTS sent by AP1, STA2 and STA3 set the own NAVs as NAV3. When monitoring the CTS sent to STA1 by AP1, STA4 sets an own NAV as NAV4.

STA1 sends a trigger frame to AP1. An ack policy field of the trigger frame is set as non-ack. While AP1 receives the trigger frame, a new transmission time period, i.e., a second time period for transmission T2, is obtained, a TXOP limit of an AC_BK is taken as an upper time limit of the new transmission time period T2, and after an interval of an SIFS, AP1 starts the new second time period for transmission T2.

STA2 and STA3 re-set own NAVs within time of Δt1=SIFS after receiving the trigger frame, and set the own NAVs as NAV2 when receiving a first frame within T2. When receiving the first frame within T2, STA4 sets an own NAV as NAV5.

AP1 performs downlink MU transmission on STA2, STA3 and STA4 within the new transmission time period TT2 simultaneously, and data transmitted by AP1 within T2 may be data in any AC queue. In addition, AP1 is not allowed to re-send indication information to other STAs to trigger other STAs to re-acquire a new transmission time period.

### Example 12 - not forming part of the claimed invention

In application of a Voice over Internet Protocol (VoIP) with silence suppression, an AP pre-allocates cycle resources, including an activation period and a quiet period, to a VoIP service of STA1. For example, the AP pre-allocates a first time period for transmission T1 for STA1, but STA1 probably does not have data to be sent, so as to enter the quiet period. In this case, STA may send a trigger frame to the AP, or set a more data field in a data frame sent finally as 0, so as to inform the AP of acquiring a second time period for transmission T2. After receiving the trigger frame, the AP takes remaining time of T1 as an upper time limit value of T2 and transmits downlink data within T2.

### Embodiment 4

The embodiment 4 provides a system for accessing to a channel. Fig. 15 is a diagram of a basis structure of a system for accessing to a channel. As shown in Fig. 15, the system includes a first STA 151 and a second STA 152.

The first STA 151 is configured to obtain a first time period for transmission and send indication information to the second STA 152 within the first time period for transmission. The indication information is configured to inform the second STA 152 of obtaining a second time period for transmission.

The second STA 152 is configured to obtain the second time period for transmission and transmit a radio frame within the second time period for transmission.

The first time period for transmission obtained by the first STA 151 may be a TXOP obtained by the first STA accessing to a channel based on contention in an EDCA mechanism. Alternatively, the first time period for transmission may be a time period for transmission obtained by the first STA 151 in a non-contention mode. For example, when the first STA 151 is a non-AP STA, the first time period for transmission may be a time period for transmission pre-allocated for the non-AP STA by an AP STA.

The ending time of the second time period for transmission obtained by the second STA 152 may be later than that of the first time period for transmission.

An upper time limit value of the second time period for transmission is set by the second STA 152 according to an upper time limit value of a TXOP corresponding to an AC of data to be sent. The upper time limit value of the second time period for transmission may be the same as that of the TXOP of the corresponding AC.

When the first time period for transmission obtained by the first STA 151 is the TXOP obtained by the first STA 151 accessing to a channel based on contention in the EDCA mechanism, obtaining, by the first STA 151, the first time period for transmission includes: after detecting idleness of media, delaying, by the first STA 151, for an AIFS, then delaying for a time period for random backoff, and successfully performing frame exchange once so as to obtain the first time period for transmission; or,
after detecting idleness of media, delaying, by the first STA 151, for an AIFS, then delaying for a time period for random backoff, sending a request to the second STA 152 so as to send an RTS signal, successfully receiving a sending allowance CTS signal returned from the second STA 152, and then successfully acquiring a TXOP.

After successfully obtaining the first time period for transmission, the first STA 151 sends the indication information to the second STA 152 and informs the second STA 152 of obtaining the second time period for transmission. The indication information may be a specific radio frame sent to the second STA 152 by the first STA 151, or may be a specific field carried by a radio frame sent to the second STA 152 by the first STA 151.

Before the first STA 151 sends the indication information to the second STA 152, the first STA 151 and the second STA 152 will perform negotiation on capability. The negotiation on capability refers to interaction between the first STA and the second STA so as to determine whether the first STA 151 supports sending of the indication information and whether the second STA 152 supports receiving of the indication information. Alternatively, before the first STA sends the indication information to the second STA, the first STA and the second STA perform indication of capability, so as to determine whether the first STA supports a capability of indicating to the second STA and whether the second STA accepts the indication capability of the first STA.

When a response frame is necessary for the specific radio frame or the radio frame carrying the specific field, obtaining, by the second STA 152, the second time period for transmission refers to obtaining the second time period for transmission after the second STA 152 sends the response frame; and
when a response frame is unnecessary for the specific radio frame or the radio frame carrying the specific field, obtaining, by the second STA 152, the second time period for transmission refers to obtaining the second time period for transmission after the second STA 152 receives the specific radio frame or the radio frame containing the specific field.

Besides, when the indication information about obtaining of the second time period for transmission is received, if the second STA decides to abandon obtaining the second time period for transmission, the second STA 152 may send a radio frame indicating ending of the second time period for transmission. The radio frame may be a response frame or an acknowledgment frame or may be a management frame which is actively sent by the second STA 152 and carries information on the abandoning.

### Embodiment 5

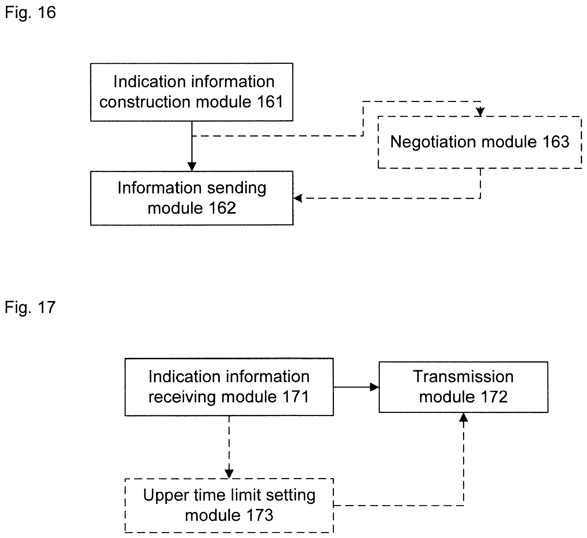

The embodiment 5 of the disclosure provides a first STA. As shown in Fig. 16, the first STA includes an indication information construction module 161 and an information sending module 162.

The indication information construction module 161 is configured to construct, after a first time period for transmission is obtained, indication information for informing a second STA of obtaining a second time period for transmission.

The information sending module 162 is configured to send the indication information to the second STA within the first time period for transmission.

The obtained first time period for transmission may be a TXOP obtained by the first STA accessing to a channel based on contention in an EDCA mechanism. Alternatively, the first time period for transmission may be a time period for transmission obtained by the first STA in a non-contention mode. For example, when the first STA is a non-AP STA, the first time period for transmission is a time period for transmission pre-allocated for the non-AP STA by an AP STA.

The indication information may be a specific radio frame which is sent to the second STA from the first STA, or may be a specific field carried by a radio frame which is sent to the second STA from the first STA.

The first STA further includes a negotiation module 163. The negotiation module 163 is configured to perform, before the indication information is sent to the second STA, negotiation on capability with the second STA, so as to determine whether the first STA supports sending of the indication information and whether the second STA supports receiving of the indication information.

Constructing, by the indication information construction module 161, the indication information for informing the second STA of obtaining the second time period for transmission includes: constructing, by the indication information construction module 161, a specific radio frame or a radio frame containing a specific field.

In a specific implementation process, the information sending module 162 may be implemented by a communication function chip inside the first STA. In practical application, the indication information construction module 161 and the negotiation module 163 may be implemented by a Central Processing Unit (CPU), a Micro Processor Unit (MPU), a Digital Signal Processor (DSP) or a Field-Programmable Gate Array (FPGA) located in the first STA.

### Embodiment 6

The embodiment 6 of the disclosure provides a second STA. As shown in Fig. 17, the second STA includes an indication information receiving module 171 and a transmission module 172.

The indication information receiving module 171 is configured to receive indication information which is configured to inform the second STA of obtaining a second time period for transmission and which sent by the first STA within a first time period for transmission.

The transmission module 172 is configured to obtain the second time period for transmission and transmit a radio frame within the second time period for transmission.

The indication information about obtaining of the second time period for transmission may be a specific radio frame, or may be a radio frame containing a specific field.

When a response frame is necessary for the specific radio frame or the radio frame carrying the specific field, obtaining, by the second STA, the second time period for transmission refers to obtaining the second time period for transmission after the second STA sends the response frame.

When a response frame is unnecessary for the specific radio frame or the radio frame carrying the specific field, obtaining, by the second STA, the second time period for transmission refers to obtaining the second time period for transmission immediately after the second STA receives the specific radio frame or the radio frame containing the specific field.

The second STA further includes an upper time limit setting module 173. The upper time limit setting module 173 is configured to set an upper time limit value of the second time period for transmission. The upper time limit setting module 173 may set an upper time limit value of a TXOP of an AC such as an AC_BK, an AC_BE, an AC_VI or an AC_VO corresponding to data to be transmitted by the transmission module 172 as the upper time limit value of the second time period for transmission.

Transmitting, by the transmission module 172, a radio frame within the second time period for transmission includes: sending, by the transmission module 172, buffer data to other STAs before the set upper time limit value of the second time period for transmission is reached. That is, the transmission module 172 may send own buffer data to any one or more of the other STAs within a time range of the second time period for transmission. Said one or more of the other STAs here may include or may not include the first STA.

In a specific implementation process, the indication information receiving module 171 and the transmission module 172 may be implemented by a communication function chip inside the second STA. In practical application, the upper time limit setting module 173 may be implemented by a CPU, an MPU, a DSP or an FPGA located in the second STA.

An embodiment of the disclosure also provides a computer readable storage medium. The storage medium includes a set of computer executable instructions for executing the method for accessing to a channel according to any one of the above embodiments of the disclosure.

Those skilled in the art shall understand that the embodiments of the disclosure may be provided as a method, a system or a computer program product. Thus, forms of hardware embodiments, software embodiments or embodiments integrating software and hardware may be adopted in the disclosure. Moreover, a form of the computer program product implemented on one or more computer available storage media (including, but are not limited to, a disk memory, an optical memory and the like) containing computer available program codes may be adopted in the disclosure.

The disclosure is described with reference to flow charts and/or block diagrams of the method, the device (system) and the computer program product according to the embodiments of the disclosure. It will be appreciated that each flow and/or block in the flow charts and/or the block diagrams and a combination of the flows and/or the blocks in the flow charts and/or the block diagrams may be implemented by computer program instructions. These computer program instructions may be provided for a general computer, a dedicated computer, an embedded processor or processors of other programmable data processing devices to generate a machine, such that an apparatus for implementing functions designated in one or more flows of the flow charts and/or one or more blocks of the block diagrams is generated via instructions executed by the computers or the processors of the other programmable data processing devices.

These computer program instructions may also be stored in a computer readable memory capable of guiding the computers or the other programmable data processing devices to work in a specific mode, such that a manufactured product including an instruction apparatus is generated via the instructions stored in the computer readable memory, and the instruction apparatus implements the functions designated in one or more flows of the flow charts and/or one or more blocks of the block diagrams.

These computer program instructions may also be loaded to the computers or the other programmable data processing devices, such that processing implemented by the computers is generated by executing a series of operation steps on the computers or the other programmable devices, and therefore the instructions executed on the computers or the other programmable devices provide a step of implementing the functions designated in one or more flows of the flow charts and/or one or more blocks of the block diagrams.

The above is only the preferred embodiments of the disclosure and is not used to limit the protection scope of the disclosure.

## Claims

1. A method for accessing to a channel, comprising:
obtaining (101), by a first Station, STA, a first time period for transmission, and sending indication information to a second STA within the first time period for transmission, the indication information being configured to inform the second STA of obtaining a second time period for transmission;
receiving, by the second STA, the indication information; and
obtaining (102), by the second STA, the second time period for transmission, in response to receiving the indication information and based on the indication information, and transmitting a radio frame within the second time period for transmission;
wherein an upper time limit value of the second time period for transmission is determined by the second STA by setting an upper time limit value of a Transmission Opportunity, TXOP, corresponding to an Access Category, AC, of data to be sent by the second STA as the upper time limit value of the second time period for transmission; and
the second time period for transmission is started before the first time period for transmission has elapsed.

2. The method according to claim 1, wherein the first time period for transmission is a Transmission Opportunity, TXOP, acquired by the first STA accessing to a channel based on contention, or a time period for transmission pre-allocated to the first STA.

3. The method according to claim 1, wherein the indication information is a specific radio frame which is sent to the second STA from the first STA, or a specific field carried by a radio frame which is sent to the second STA from the first STA.

4. The method according to claim 3, further comprising:
obtaining, when a response frame is necessary for the specific radio frame or the radio frame carrying the specific field, the second time period for transmission after the second STA sends the response frame, in the step of obtaining, by the second STA, the second time period for transmission; and
obtaining, when a response frame is unnecessary for the specific radio frame or the radio frame carrying the specific field, the second time period for transmission after the second STA receives the radio frame, in the step of obtaining, by the second STA, the second time period for transmission.

5. The method according to any one of claims 1 to 4, further comprising:
when the indication information is received, pausing, by the second STA, a backoff process which is being executed, and transmitting a data frame; and
after the second time period for transmission has elapsed, resuming, by the second STA, the paused backoff process.

6. The method according to any one of claims 1 to 4, wherein before the first STA sends the indication information to the second STA, the method further comprises:
performing, by the first STA and the second STA, negotiation on capability or indication of capability.

7. The method according to claim 1, wherein the indication information is further configured to set a Network Allocation Vector, NAV; and when the indication information is received by another STA recently updated by the first STA, said another STA sets an NAV after a specific time.

8. The method according to any one of claims 1 to 4, further comprising: after the second STA receives the indication information, if the second STA decides to abandon obtaining the second time period for transmission, sending, by the second STA, a radio frame, indicating ending of the second time period for transmission, to the first STA, wherein the radio frame is a response frame or an acknowledgment frame or a management frame carrying information on the abandoning.

9. A system for accessing to a channel, comprising:
a first Station (151), STA, configured to obtain a first time period for transmission and send indication information to a second STA (152) within the first time period for transmission, the indication information being configured to inform the second STA of obtaining a second time period for transmission; and
the second STA configured (152) to receive the indication information, obtain the second time period for transmission, in response to receiving the indication information and based on the indication information, and transmit a radio frame within the second time period for transmission;
wherein the second STA (152) is further configured to determine an upper time limit value of the second time period for transmission by setting an upper time limit value of a Transmission Opportunity, TXOP, corresponding to an Access Category, AC, of data to be sent by the second STA (152) as the upper time limit value of the second time period for transmission, and determine that the second time period for transmission is started before the first time period for transmission has elapsed.

10. A computer readable storage medium containing a set of computer executable instructions for executing the method for accessing to a channel according to any one of claims 1 to 8.

## Patentansprüche

1. Kanalzugriffsverfahren, umfassend:
Erhalten (101), durch eine erste Station, STA, eines ersten Übertragungszeitraums und Senden von Angabeinformationen zu einer zweiten STA innerhalb des ersten Übertragungszeitraums, wobei die Angabeinformationen zum Informieren der zweiten STA über das Erhalten eines zweiten Übertragungszeitraums ausgebildet sind;
Empfangen, durch die zweite STA, der Angabeinformationen; und
Erhalten (102), durch die zweite STA, des zweiten Übertragungszeitraums als Antwort auf das Empfangen der Angabeinformationen und auf der Basis der Angabeinformationen, und Übertragen eines Funkrahmens innerhalb des zweiten Übertragungszeitraums;
wobei ein oberer Zeitgrenzwert des zweiten Übertragungszeitraums durch die zweite STA durch Einstellen eines oberen Zeitgrenzwerts einer "Transmission Opportunity", TXOP, die einer "Access Category", AC, von Daten entspricht, die durch die zweite STA gesendet werden sollen, als der obere Zeitgrenzwert des zweiten Übertragungszeitraums bestimmt wird; und
der zweite Übertragungszeitraum beginnt, bevor der erste Übertragungszeitraum abgelaufen ist.

2. Verfahren nach Anspruch 1, bei dem der erste Übertragungszeitraum eine "Transmission Opportunity", TXOP, die durch die erste STA erfasst wird, die auf der Basis eines Zugangskonflikts auf einen Kanal zugreift, oder ein Übertragungszeitraum ist, der im Vorhinein der ersten STA zugeteilt worden ist.

3. Verfahren nach Anspruch 1, bei dem die Angabeinformationen ein spezifischer Funkrahmen, der von der ersten STA zur zweiten STA gesendet wird, oder ein spezifisches Feld sind, das von einem Funkrahmen übertragen wird, der von der ersten STA zur zweiten STA gesendet wird.

4. Verfahren nach Anspruch 3, ferner umfassend:
Erhalten, wenn ein Antwortrahmen für den spezifischen Funkrahmen oder den Funkrahmen, der das spezifische Feld überträgt, erforderlich ist, des zweiten Übertragungszeitraums, nachdem die zweite STA den Antwortrahmen gesendet hat, in dem Schritt des Erhaltens, durch die zweite STA, des zweiten Übertragungszeitraums; und
Erhalten, wenn ein Antwortrahmen für den spezifischen Funkrahmen oder den Funkrahmen, der das spezifische Feld überträgt, nicht erforderlich ist, des zweiten Übertragungszeitraums, nachdem die zweite STA den Funkrahmen empfangen hat, in dem Schritt des Erhaltens, durch die zweite STA, des zweiten Übertragungszeitraums.

5. Verfahren nach einem der Ansprüche 1 bis 4, ferner umfassend:
wenn die Angabeinformationen empfangen worden sind, Stoppen, durch die zweite STA, eines Backoff-Verfahrens, das ausgeführt wird, und Übertragen eines Datenrahmens; und
nachdem der zweite Übertragungszeitraum abgelaufen ist, Fortführen, durch die zweite STA, des gestoppten Backoff-Verfahrens.

6. Verfahren nach einem der Ansprüche 1 bis 4, bei dem, bevor die erste STA die Angabeinformationen zu der zweiten STA sendet, das Verfahren ferner umfasst:
Durchführen, durch die erste STA und die zweite STA, einer Abklärung der Befähigung oder einer Angabe der Befähigung.

7. Verfahren nach Anspruch 1, bei dem die Angabeinformationen ferner so ausgebildet sind, dass sie einen "Network Allocation Vector", NAV, einstellen; und wenn die Angabeinformationen durch eine weitere STA empfangen werden, die kürzlich durch die erste STA aktualisiert worden ist, diese weitere STA einen NAV nach einer spezifischen Zeit einstellt.

8. Verfahren nach einem der Ansprüche 1 bis 4, ferner umfassend, nachdem die zweite STA die Angabeinformationen empfangen hat, wenn die zweite STA entscheidet, das Erhalten des zweiten Übertragungszeitraums abzubrechen, Senden, durch die zweite STA, eines Funkrahmens, der das Ende des zweiten Übertragungszeitraums angibt, zu der ersten STA, wobei der Funkrahmen ein Antwortrahmen oder ein Bestätigungsrahmen oder ein Verwaltungsrahmen ist, der Informationen bezüglich des Abbrechens überträgt.

9. System für einen Kanalzugriff, umfassend:
eine erste Station (151), STA, die zum Erhalten eines ersten Übertragungszeitraums und Senden von Angabeinformationen zu einer zweiten STA (152) innerhalb des ersten Übertragungszeitraums ausgebildet ist, wobei die Angabeinformationen zum Informieren der zweiten STA über das Erhalten eines zweiten Übertragungszeitraums ausgebildet sind;
wobei die zweite STA (152) zum Empfangen der Angabeinformationen, Erhalten des zweiten Übertragungszeitraums als Antwort auf das Empfangen der Angabeinformationen und auf der Basis der Angabeinformationen und Übertragen eines Funkrahmens innerhalb des zweiten Übertragungszeitraums ausgebildet ist;
wobei die zweite STA (152) ferner zum Bestimmen eines oberen Zeitgrenzwerts des zweiten Übertragungszeitraums durch Einstellen eines oberen Zeitgrenzwerts einer "Transmission Opportunity", TXOP, die einer "Access Category", AC, von Daten entspricht, die durch die zweite STA (152) gesendet werden sollen, als den oberen Zeitgrenzwert des zweiten Übertragungszeitraums, und Bestimmen, dass der zweite Übertragungszeitraum beginnt, bevor der erste Übertragungszeitraum abgelaufen ist, ausgebildet ist.

10. Computerlesbares Speichermedium, das einen Satz von computerausführbaren Anweisungen zum Ausführen des Kanalzugriffsverfahrens nach einem der Ansprüche 1 bis 8 enthält.

## Revendications

1. Procédé d'accès à un canal, comprenant :
l'obtention (101), par une première station, STA, d'une première période de temps de transmission, et l'envoi d'informations d'indication à une deuxième STA dans la première période de temps de transmission, les informations d'indication étant configurées pour informer la deuxième STA de l'obtention d'une deuxième période de temps de transmission ;
la réception, par la deuxième STA, des informations d'indication ; et
l'obtention (102), par la deuxième STA, de la deuxième période de temps de transmission, en réponse à la réception des informations d'indication et d'après les informations d'indication, et la transmission d'une trame radio dans la deuxième période de temps de transmission ;
dans lequel une valeur de limite de temps supérieure de la deuxième période de temps de transmission est déterminée par la deuxième STA en réglant une valeur de limite de temps supérieure d'une opportunité de transmission, TXOP, correspondant à une catégorie d'accès, AC, de données à envoyer par la deuxième STA en tant que valeur de limite de temps supérieure de la deuxième période de temps de transmission ; et
la deuxième période de temps de transmission est démarrée avant que la première période de temps de transmission se soit écoulée.

2. Procédé selon la revendication 1, dans lequel la première période de temps de transmission est une opportunité de transmission, TXOP, acquise par la première STA accédant à un canal d'après une collision, ou une période de temps de transmission pré-allouée à la première STA.

3. Procédé selon la revendication 1, dans lequel l'information d'indication est une trame radio spécifique qui est envoyée à la deuxième STA depuis la première STA, ou un champ spécifique acheminé par une trame radio qui est envoyée à la deuxième STA depuis la première STA.

4. Procédé selon la revendication 3, comprenant en outre :
l'obtention, lorsqu'une trame de réponse est nécessaire pour la trame radio spécifique ou la trame radio acheminant le champ spécifique, de la deuxième période de temps de transmission après que la deuxième STA envoie la trame de réponse, à l'étape d'obtention, par la deuxième STA, de la deuxième période de temps de transmission ; et
l'obtention, lorsqu'une trame de réponse est inutile pour la trame radio spécifique ou la trame radio acheminant le champ spécifique, de la deuxième période de temps de transmission après que la deuxième STA reçoit la trame radio, à l'étape d'obtention, par la deuxième STA, de la deuxième période de temps de transmission.

5. Procédé selon l'une quelconque des revendications 1 à 4, comprenant en outre :
lorsque les informations d'indication sont reçues, l'interruption, par la deuxième STA, d'un processus de délai d'attente qui est exécuté, et la transmission d'une trame de données ; et
après que la deuxième période de temps de transmission s'est écoulée, la reprise, par la deuxième STA, du processus de délai d'attente interrompu.

6. Procédé selon l'une quelconque des revendications 1 à 4, dans lequel avant que la première STA envoie les informations d'indication à la deuxième STA, le procédé comprend en outre :
la réalisation, par la première STA et la deuxième STA, d'une négociation sur la capacité ou sur une indication de capacité.

7. Procédé selon la revendication 1, dans lequel les informations d'indication sont en outre configurées pour régler un vecteur d'allocation de réseau, NAV ; et lorsque les informations d'indication sont reçues par une autre STA récemment mise à jour par la première STA, ladite autre STA règle un NAV après un temps spécifique.

8. Procédé selon l'une quelconque des revendications 1 à 4, comprenant en outre : après que la deuxième STA reçoit les informations d'indication, si la deuxième STA décide d'abandonner l'obtention de la deuxième période de temps de transmission, l'envoi, par la deuxième STA, d'une trame radio, indiquant la fin de la deuxième période de temps de transmission, à la première STA, dans lequel la trame radio est une trame de réponse ou une trame d'accusé de réception ou une trame de gestion acheminant des informations sur l'abandon.

9. Système d'accès à un canal, comprenant :
une première station (151), STA, configurée pour obtenir une première période de temps de transmission et envoyer des informations d'indication à une deuxième STA (152) dans la première période de temps de transmission, les informations d'indication étant configurées pour informer la deuxième STA de l'obtention d'une deuxième période de temps de transmission ; et
la deuxième STA (152) configurée pour recevoir les informations d'indication, obtenir la deuxième période de temps de transmission, en réponse à la réception des informations d'indication et d'après les informations d'indication, et transmettre une trame radio dans la deuxième période de temps de transmission ;
dans lequel la deuxième STA (152) est en outre configurée pour déterminer une valeur de limite de temps supérieure de la deuxième période de temps de transmission en réglant une valeur de limite de temps supérieure d'une opportunité de transmission, TXOP, correspondant à une catégorie d'accès, AC, de données à envoyer par la deuxième STA (152) en tant que valeur de limite de temps supérieure de la deuxième période de temps de transmission, et déterminer que la deuxième période de temps de transmission est démarrée avant que la première période de temps de transmission se soit écoulée.

10. Support de stockage lisible par ordinateur comprenant un ensemble d'instructions exécutables par ordinateur pour exécuter le procédé d'accès à un canal selon l'une quelconque des revendications 1 à 8.
